# FASCICULE DE BREVET EUROPEEN

(11) **EP 2 982 022 B1**
(45) Date de publication et mention de la délivrance du brevet: **20.01.2021**
(21) Numéro de dépôt: 14714301.0
(22) Date de dépôt: 02.04.2014
(51) Int. Cl.: H02K 1/27, H02K 1/12

(54) **MOTEUR ÉLECTRIQUE À FAIBLE COUPLE DE COURT-CIRCUIT, DISPOSITIF DE MOTORISATION À PLUSIEURS MOTEURS ET PROCÉDÉ DE FABRICATION D'UN TEL MOTEUR**
ELEKTROMOTOR MIT NIEDRIGEM KURZSCHLUSSDREHMOMENT, ANTRIEBSVORRICHTUNG MIT MEHREREN MOTOREN UND VERFAHREN ZUR HERSTELLUNG SOLCH EINES MOTORS
ELECTRIC MOTOR HAVING A LOW SHORT-CIRCUIT TORQUE, DRIVE DEVICE WITH A PLURALITY OF MOTORS AND METHOD FOR PRODUCING SUCH A MOTOR

(30) Priorité: 05.04.2013 FR 1353101
(43) Date de publication de la demande: 10.02.2016
(73) Titulaire: Safran Electronics & Defense, 75015 Paris (FR)
(72) Inventeur: PIATON, Jérôme, 75015 PARIS (FR)
(74) Mandataire: Lavialle, Bruno François Stéphane
(86) Numéro de dépôt international: PCT/EP2014/056631
(87) Numéro de publication internationale: WO 2014/161911

(56) Documents cités:
- EP-A1- 0 549 427
- EP-A1- 0 549 428
- EP-A2- 1 289 101
- FR-A1- 2 768 271

## Description

La présente invention concerne un moteur électrique à faible couple de court-circuit particulièrement intéressant pour une utilisation dans un dispositif de motorisation à plusieurs moteurs entraînant un même élément.

Un moteur à aimants comprend généralement un rotor pourvu d'aimants et un stator formé d'un paquet de tôles entouré de circuits électriques en bobines formant des phases électriques permettant le pilotage du moteur (voir les moteurs décrits dans EP 1289101 et EP 0549427).

Certains dispositifs de motorisation comprennent un premier moteur et un deuxième moteur qui sont reliés à un même élément pour pouvoir entraîner tous deux cet élément indépendamment l'un de l'autre. Les rotors des deux moteurs peuvent à cette fin être reliés au même arbre.

En mode de fonctionnement nominal, seul le premier moteur est piloté pour entraîner l'élément, le deuxième moteur ne sert qu'en cas de défaillance du premier moteur.

Cette redondance apporte plus de sécurité dans le fonctionnement du dispositif de motorisation au détriment toutefois d'une masse relativement importante du dispositif de motorisation.

En outre, certaines pannes du moteur ou de son électronique de pilotage peuvent amener le moteur à exercer un effort de freinage. Les moteurs doivent donc être dimensionnés pour pouvoir compenser cet effort de freinage engendré par le moteur défaillant. En particulier, lorsque le moteur défaillant présente un court-circuit entre phases, l'entraînement de l'élément par l'autre moteur engendre la rotation du rotor du moteur défaillant, induisant dans les phases en court-circuit un courant qui ne peut être évacué et provoque l'apparition d'un couple résistant.

Les moteurs doivent donc être dimensionnés pour pouvoir déplacer seuls l'élément en tenant non seulement compte des sollicitations extérieures s'exerçant sur l'élément mais aussi du couple résistant qu'engendrerait un moteur défaillant. Les moteurs doivent donc être susceptibles de produire un couple plus important, ce qui augmente leur coût, leur encombrement et leur masse.

On rappelle que le couple de court-circuit maximal C_{CC} a pour valeur C_{CC} = 3/2.K²/ (2p. (L-M)) et apparaît à la vitesse V = R/(p.(L-M) avec une pente p = 3/2.K²/R où K est le coefficient de couple phase/neutre, p est le nombre de paires de pôles, L est l'inductance du moteur, M est l'inductance mutuelle phase/neutre et R est la résistance phase/neutre.

Pour limiter ce couple, il est connu d'augmenter la résistance des bobines pour augmenter la vitesse de rotation du rotor à laquelle apparaît le couple maximal. Cette solution n'est donc envisageable que pour les moteurs travaillant à faible vitesse. Ceci augmente en outre les pertes par effet Joule, dégradant les performances du moteur et rendant nécessaire un refroidissement du moteur.

Un but de l'invention est de proposer un moteur à aimant ayant un faible couple de court-circuit entre phases.

A cet effet, on prévoit, selon l'invention, un moteur à aimants, comportant un stator formé d'un paquet de tôles pourvu de bobines pour former des phases et un rotor pourvu d'aimants répartis angulairement autour d'au moins un tronçon du rotor et reçu à pivotement dans un logement du stator. Le logement du stator a une longueur supérieure à une longueur dudit tronçon du rotor et le rotor est pourvu d'au moins une bague en matériau magnétique qui jouxte ledit tronçon et est reçu dans le logement du stator.

Ainsi, la bague en matériau magnétique augmente l'inductance du moteur, ce qui permet de diminuer le couple maximal de court-circuit. L'agencement de l'invention est extrêmement avantageux car le faible couple de court-circuit est obtenu sans modification de la structure du stator et donc sans modification de l'outil industriel servant à sa production. Il en est de même pour la structure générale du rotor. Le moteur de l'invention n'est donc pas beaucoup plus cher à fabriquer qu'un moteur classique.

L'invention concerne en outre un dispositif de motorisation comportant au moins deux moteurs dont au moins un du type précité, les deux moteurs étant reliés à un même élément à déplacer.

Le moteur du type précité est utilisé en mode de fonctionnement nominal pour entraîner l'élément à déplacer. En cas de court-circuit entre phases, le couple maximal de court-circuit étant faible, l'autre moteur n'est dimensionné principalement qu'en fonction du couple nécessaire pour l'entraînement de l'élément à déplacer. Le dispositif de motorisation de l'invention est donc moins lourd et moins encombrant globalement que les dispositifs de motorisation à plusieurs moteurs classiques.

L'invention a également pour objet un procédé de fabrication d'un tel moteur. Ce procédé comprend les étapes de fabriquer le stator, de monter les aimants sur le rotor et de monter sur le rotor une bague en matériau magnétique, le stator et la bague ayant une longueur choisie en fonction d'une inductance souhaitée du moteur et la bague ayant une surface extérieure choisie en fonction d'une réluctance souhaitée du moteur.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue schématique, en coupe longitudinale, d'un moteur selon un premier mode de réalisation de l'invention,
- la figure 2 est une vue en coupe transversale, selon la ligne II-II, de ce moteur,
- la figure 3 est une vue analogue à la figure 2 d'une variante du premier mode de réalisation,

- la figure 4 est une vue analogue à la figure 1 d'un moteur selon un deuxième mode de réalisation,
- la figure 5 est une vue analogue à la figure 1 d'un moteur selon le troisième mode de réalisation.

En référence aux figures, un moteur conforme à l'invention comprend un stator 1 formé, de façon classique, d'un paquet de tôles pourvu de bobines pour former des phases et un rotor 2 reçu à pivotement dans un logement 3 du stator 1. Le rotor 2 est pourvu d'aimants 4 répartis angulairement autour d'au moins un tronçon 5 du rotor 2. La structure globale du moteur à aimants est connue de sorte qu'elle ne sera pas plus détaillée ici.

Conformément à l'invention, le logement 3 du stator 1 a une longueur L supérieure à une longueur l dudit tronçon 5 du rotor 2.

Le rotor 2 est pourvu d'au moins une bague 6 en matériau magnétique qui jouxte ledit tronçon 5 et est reçu dans le logement 3 du stator 1. La bague 6 est ici en fer ou en un alliage magnétique tel que, par exemple, un alliage comportant du fer et du silicium ou du fer et du cobalt.

La longueur L du logement 3 du stator 1 et la longueur l' de la bague 6 sont déterminées pour avoir une inductance adaptée pour que le moteur ait un couple maximal de court-circuit le plus faible possible tout en ayant des performances adaptées à son utilisation future.

L'entrefer entre la bague 6 et le stator 1 est sensiblement identique à l'entrefer minimal entre les aimants du rotor 2 et le stator 1. La bague 6 permet ainsi une augmentation de l'inductance par rapport à un moteur dépourvu d'une telle bague. Avoir un entrefer identique, d'une part, entre la bague 6 et le stator 1 et, d'autre part, entre les aimants et le stator 1 facilite également la fabrication du moteur.

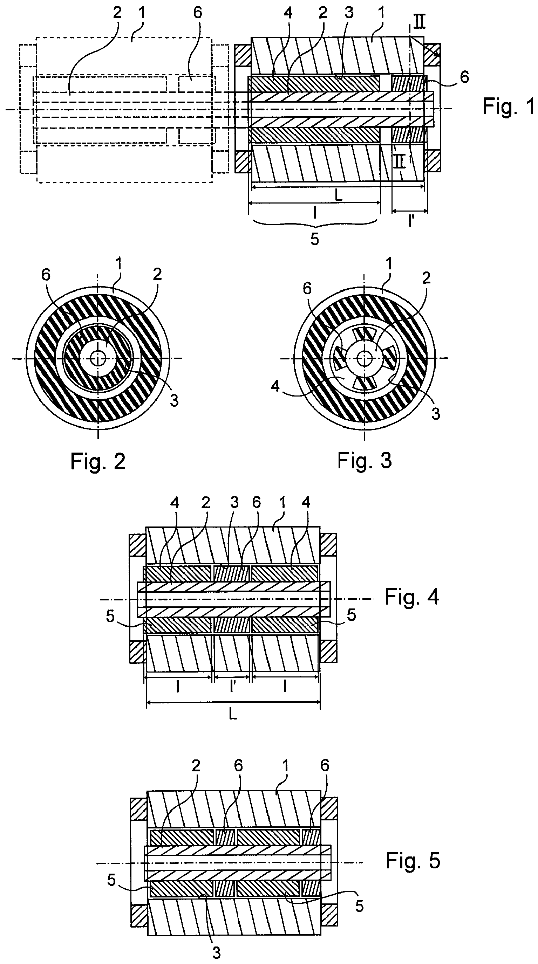

En référence aux figures 1 et 2, et selon le premier mode de réalisation, le rotor 2 ne comprend qu'un tronçon 5 et la bague 6 est placée au voisinage de l'une des extrémités du tronçon 5.

La bague 6 a ici une surface extérieure lisse. La surface lisse ne crée pas d'effet de saillance.

Dans la variante de la figure 3, la bague 6 a une surface extérieure dentée. La bague 6 a ici une section transversale ayant un contour crénelé.

La surface extérieure dentée permet de créer un effet de réluctance susceptible d'engendrer un couple au moyen d'une commande adaptée du moteur. Ceci peut être utile dans certaines applications.

Il va de soi que les dents de la bague 6 peuvent avoir des flancs parallèles, convergents ou divergents selon l'effet de réluctance souhaitée.

Sur la figure 1, on a représenté en trait pointillé un deuxième moteur pour former un dispositif de motorisation à deux moteurs identiques ayant des rotors 2 solidaires d'un même arbre de sortie 7 relié à l'élément à déplacer. Les moteurs sont reliés à une unité de commande 10, connue en elle-même, qui est agencée pour qu'en mode de fonctionnement nominal un seul des moteurs soit alimenté et entraîne l'arbre de sortie 7.

Les éléments identiques ou analogues à ceux précédemment décrits porteront la même référence numérique dans la description qui suit des deuxième et troisième modes de réalisation.

En référence à la figure 4, et selon le deuxième mode de réalisation, le rotor 2 comprend deux tronçons 5 pourvus d'aimants 4 et la bague 6 est montée entre les deux tronçons 5.

En référence à la figure 5, et selon le troisième mode de réalisation, le rotor 2 comprend deux tronçons 5 pourvus d'aimants 4 et une bague 6 est montée entre les deux tronçons 5.

Une deuxième bague 6 en matériau magnétique est montée à une extrémité de l'un des tronçons 5.

Dans tous les modes de réalisations, l'agencement de la ou des bagues 6 sur le rotor 2 est de préférence effectué de manière à limiter le risque de fuite magnétique au niveau des aimants. A cet effet, on prévoit, dans le sens longitudinal, un espace entre la ou les bagues 6 et les aimants, cet espace étant supérieur à l'entrefer entre les aimants et le stator. De préférence, l'entrefer est égal à deux fois cet entrefer. Alternativement ou cumulativement, la ou chaque bague 6 est réalisée en deux parties annulaires coaxiales, à savoir une partie extérieure en matériau magnétique et une partie intérieure, en contact avec le rotor 2 donc, en matériau amagnétique. L'épaisseur de la partie intérieure est supérieure à l'entrefer entre les aimants et le stator.

Le moteur du premier mode de réalisation est fabriqué selon le procédé suivant.

Le procédé de fabrication selon l'invention comprend les étapes de :
- fabriquer le stator 1,
- monter les aimants 4 sur le tronçon 5 du rotor 2,
- monter sur le rotor 2 la bague 6 en matériau magnétique.

Lors du procédé, les longueurs L et l' du logement 3 du stator 1 et de la bague 6 respectivement sont choisies en fonction d'une inductance souhaitée du moteur.

En outre, la bague 6 a une surface extérieure choisie en fonction d'une réluctance souhaitée du moteur.

Bien entendu, l'invention n'est pas limitée aux modes de réalisation décrits mais englobe toute variante entrant dans le champ de l'invention telle que définie par les revendications.

En particulier, le dispositif de motorisation peut comprendre plus de deux moteurs. Parmi ces moteurs, seule une partie peut être équipée d'au moins une bague 6, les autres en étant dépourvus. Dans ce dernier cas, l'unité de commande est agencée de telle manière que le ou les moteurs équipés d'une bague soient utilisés en mode de fonctionnement nominal, les autres moteurs étant utilisés en cas de défaillance.

Les rotors des moteurs du dispositif de motorisation peuvent être reliés directement à l'élément à déplacer, ou être directement reliés à un même arbre, ou être reliés à ceux-ci par un moyen de transmission de mouvement.

Un moteur peut comprendre plus de deux bagues 6.

## Revendications

1. Moteur à aimants, comportant un stator (1) formé d'un paquet de tôles pourvu de bobines pour former des phases et un rotor (2) pourvu d'aimants (4) répartis angulairement autour d'au moins un tronçon (5) du rotor et reçu à pivotement dans un logement (3) du stator, dans lequel le stator a une longueur supérieure à une longueur dudit tronçon du rotor et dans lequel le rotor est pourvu d'au moins une bague (6) en matériau magnétique qui jouxte ledit tronçon et est reçue dans le logement du stator, un entrefer entre la bague et le stator étant identique à un entrefer minimal entre les aimants et le stator et **caractérisé en ce que** le moteur comprend, dans le sens longitudinal, un espace amagnétique entre la bague (6) et les aimants (4), cet espace étant supérieur à un entrefer entre les aimants et le stator (1).

2. Moteur selon la revendication 1, dans lequel la bague (6) a une surface extérieure lisse.

3. Moteur selon la revendication 1, dans lequel la bague (6) a une surface extérieure dentée.

4. Moteur selon la revendication 1, dans lequel le rotor (2) comprend deux tronçons (5) pourvus d'aimants (4) et la bague (6) est montée entre les deux tronçons.

5. Moteur selon la revendication 4, dans lequel une deuxième bague (6) en matériau magnétique est montée à une extrémité de l'un des tronçons (5).

6. Moteur selon la revendication 1, dans lequel la bague (6) est en fer ou un alliage magnétique.

7. Moteur selon la revendication 1, dans lequel la bague (6) est réalisée en deux parties annulaires coaxiales, à savoir une partie extérieure en matériau magnétique et une partie intérieure, en contact avec le rotor (2), en matériau amagnétique, la partie intérieure ayant une épaisseur supérieure à un entrefer entre les aimants (4) et le stator (1).

8. Dispositif de motorisation comportant au moins deux moteurs dont au moins un selon l'une quelconque des revendications précédentes, les rotors (2) des moteurs étant reliés à un même élément à déplacer.

9. Dispositif selon la revendication 8, dans lequel les rotors (2) des moteurs sont solidaires d'un même arbre.

10. Procédé de fabrication d'un moteur selon l'une quelconque des revendications 1 à 7, comprenant les étapes de fabriquer le stator (1), de monter les aimants (4) sur le rotor (2) et de monter sur le rotor une bague (6) en matériau magnétique, le stator et la bague ayant une longueur choisie en fonction d'une inductance souhaitée du moteur et la bague ayant une surface extérieure choisie en fonction d'une réluctance souhaitée du moteur.

## Patentansprüche

1. Magnetmotor, umfassend einen Stator (1), der aus einem Blechpaket gebildet ist, das mit Spulen versehen ist, um Phasen zu bilden, und einen Rotor (2), der mit Magneten (4) versehen ist, die um mindestens einen Abschnitt (5) des Rotors winkelmäßig verteilt sind, und der verschwenkbar in einer Aufnahme (3) des Stators aufgenommen ist, wobei der Stator eine Länge hat, die größer als eine Länge des genannten Abschnittes des Rotors ist, und wobei der Rotor mit mindestens einem Ring (6) aus einem magnetischen Material versehen ist, der den genannten Abschnitt säumt und in einer Aufnahme des Stators aufgenommen ist, wobei ein Spalt zwischen dem Ring und dem Stator identisch zu einem Mindestspalt zwischen den Magneten und dem Stator ist, und **dadurch gekennzeichnet, dass** der Motor in Längsrichtung einen nichtmagnetischen Zwischenraum zwischen dem Ring (6) und den Magneten (4) umfasst, wobei dieser Zwischenraum größer als ein Spalt zwischen den Magneten und dem Stator (1) ist.

2. Motor nach Anspruch 1, bei dem der Ring (6) eine glatte Außenfläche hat.

3. Motor nach Anspruch 1, bei dem der Ring (6) eine gezahnte Außenfläche hat.

4. Motor nach Anspruch 1, bei dem der Rotor (2) zwei Abschnitte (5) umfasst, die mit Magneten (4) versehen sind, und der Ring (6) zwischen den beiden Abschnitten angebracht ist.

5. Motor nach Anspruch 4, bei dem ein zweiter Ring (6) aus magnetischem Material an einem Ende des einen der Abschnitte (5) angebracht ist.

6. Motor nach Anspruch 1, bei dem der Ring (6) aus Eisen oder einer magnetischen Legierung ist.

7. Motor nach Anspruch 1, bei dem der Ring (6) aus zwei koaxialen ringförmigen Abschnitten hergestellt ist, nämlich einem äußeren Abschnitt aus magnetischem Material und einem mit dem Rotor (2) in Kontakt stehenden inneren Abschnitt aus einem nichtmagnetischen Material, wobei der innere Abschnitt eine Dicke hat, die größer als ein Spalt zwischen den Magneten (4) und dem Stator (1) ist.

8. Motorisierungsvorrichtung, umfassend mindestens zwei Motoren, darunter mindestens einen nach einem der vorhergehenden Ansprüche, wobei die Rotoren (2) der Motoren mit einem selben zu verschiebenden Element verbunden sind.

9. Vorrichtung nach Anspruch 8, bei der die Rotoren (2) der Motoren fest mit einer selben Welle verbunden sind.

10. Verfahren zur Herstellung eines Motors nach einem der Ansprüche 1 bis 7, umfassend die Schritte des Herstellens des Stators (1), des Anbringens der Magnete (4) auf dem Rotor (2) und des Anbringens eines Rings (6) aus magnetischem Material auf dem Rotor, wobei der Stator und der Ring eine Länge haben, die entsprechend einer gewünschten Induktanz des Motors gewählt ist, und der Ring eine Außenfläche hat, die entsprechend einer gewünschten Reluktanz des Motors gewählt ist.

## Claims

1. A magnet motor, comprising a stator (1) formed from a bundle of sheets provided with coils to form phases and a rotor (2) provided with magnets (4) distributed angularly around at least a portion (5) of the rotor and received pivotally in a housing (3) of the stator, **characterized in that** the stator has a length greater than a length of said portion of the rotor, and **in that** the rotor is provided with at least one ring (6) made of magnetic material, which adjoins said portion and is received in the housing of the stator, a air-gap between the ring and the stator being identical to a minimal air-gap between the magnets and the stator and the magnet motor comprising, in the longitudinal direction, a non-magnetic space between the ring (6) and the magnets (4), this space being greater than an air-gap between the magnets and the stator (1).

2. The magnet motor as claimed in claim 1, in which the ring (6) has a smooth outer surface.

3. The magnet motor as claimed in claim 1, in which the ring (6) has a toothed outer surface.

4. The magnet motor as claimed in claim 1, in which the rotor (2) comprises two portions (5) provided with magnets (4), and the ring (6) is mounted between the two portions.

5. The magnet motor as claimed in claim 4, in which a second ring (6) made of magnetic material is mounted at an end of one of the portions (5).

6. The magnet motor as claimed in claim 1, in which the ring (6) is made of iron or a magnetic alloy.

7. The magnet motor as claimed in claim 1, in which the ring (6) is formed in two coaxial annular parts, i.e. an outer part made of magnetic material and an inner part, which is contact with the rotor (2) and is made of non-magnetic material, the inner part having a thickness greater than an air-gap between the magnets (4) and the stator (1).

8. A drive device comprising at least two motors, of which at least one is formed in accordance with any one of the preceding claims, the rotors (2) of the motors being connected to the same element to be moved.

9. The device as claimed in claim 8, in which the rotors (2) of the motors are connected to the same shaft.

10. A method for producing a magnet motor as claimed in any one of claims 1 to 7, comprising the steps of producing the stator (1), of mounting the magnets (4) on the rotor (2) and of mounting a ring (6) made of magnetic material on the rotor, the stator and the ring having a length selected on the basis of a desired inductance of the magnet motor, and the ring having an outer surface selected on the basis of a desired reluctance of the magnet motor.
